## Europäisches Patentamt
## European Patent Office
## Office européen des brevets

(19)

(11) Veröffentlichungsnummer : **0 120 486**
**B1**

(12) **EUROPÄISCHE PATENTSCHRIFT**

(45) Veröffentlichungstag der Patentschrift :
25.05.88

(51) Int. Cl.⁴ : **C 04 B 18/12**

(21) Anmeldenummer : **84103239.4**

(22) Anmeldetag : **23.03.84**

(54) Verfahren und Anlage zur Gewinnung von Baustoffen aus Steinkohlenaufbereitungsabgängen.

(30) Priorität : **23.03.83 DE 3310495**

(43) Veröffentlichungstag der Anmeldung :
**03.10.84 Patentblatt 84/40**

(45) Bekanntmachung des Hinweises auf die Patenterteilung : **25.05.88 Patentblatt 88/21**

(84) Benannte Vertragsstaaten :
**BE DE FR GB NL**

(56) Entgegenhaltungen :
**GLÜCKAUF, Band 118, Nr. 21, 1982, Seiten 1098-1103, (DE) D. LEININGER et al.: "Die Verwertung von Aufbereitungsabgängen in der Bundesrepublik Deutschland".**

(73) Patentinhaber : **Carl Still GmbH & Co. KG**
**Kaiserwall 17-23**
**D-4350 Recklinghausen (DE)**

(72) Erfinder : **Schick, Gilbert**
**Am Sichelscheid 7**
**D-5120 Herzogenrath (DE)**
Erfinder : **Lorenz, Kurt, Dr.**
**Habichtstrasse 65**
**D-4321 Hattingen (DE)**
Erfinder : **Dungs, Horst**
**Am Düngelbruch 21**
**D-4690 Herne (DE)**

(74) Vertreter : **Dahlkamp, Heinrich-Leo, Dipl.-Ing.**
**c/o Firma Carl Still GmbH & Co. KG Kaiserwall 17 - 23**
**D-4350 Recklinghausen (DE)**

EP 0 120 486 B1

## Beschreibung

Die Erfindung betrifft ein Verfahren und eine Anlage zur Gewinnung von Baustoffen aus Steinkohlenaufbereitungsabgängen, wobei das in den Abgängen enthaltene Gesteinsmaterial durch thermische Umwandlung keramisiert und die dazu erforderliche Prozeßenergie mindestens teilweise aus der in den Abgängen enthaltenen brennbaren Substanz gewonnen wird.

Steinkohlenaufbereitungsabgänge, auch Waschberge genannt, bestehen aus Gesteinsmaterial unterschiedlicher mineralogischer Zusammensetzung und enthalten Kohlenrestbestandteile. Sie fallen in der Kohlenwäsche als unvermeidbare Teilausträge beim Sortieren an. In Abhängigkeit von der Körnungsgröße kann die vorwiegend in Form von Kohlenstoff in den Abgängen verbleibende brennbare Substanz bis zu 20 Mol-% betragen. Dieser Betrag kann durch Verwachsungen von Kohle mit Kohlemineralien, die durch aufbereitungstechnische Maßnahmen nicht wirtschaftlich trennbar sind, noch überschritten werden. Erfahrungsgemäß besitzen Waschberge daher Restheizwerte etwa von 2.000 kJ/kg bis etwa 6.000 kJ/kg, wobei in der Regel grobe Fraktionen einen geringeren, Feinstwaschberge dagegen einen höheren Heizwert aufweisen.

Unter dem Titel « Verwertung von Aufbereitungsabgängen in der Bundesrepublik Deutschland » (Glückauf 118 (1982) Nr. 21, Seiten 1098-1103) sind bereits Verfahren zur Bergeveredlung beschrieben. Zur Keramisierung von Grobwaschbergen, insbesondere aus tonig-silikatischen Gesteinen, wurde danach bereits versucht, diese zu festen Rohstoffzuschlagstoffen für die Bauindustrie in einem Schubrostofen zu veredeln. Dabei soll sich jedoch gezeigt haben, daß diese nur für die endotherme Reaktion der Keramisierung ausgelegten Ofeneinheiten für tonig-silikatische Gesteine mit brennbaren Substanzen, also auch für Waschberge, nicht geeignet sind. Die im Gestein enthaltenen Kohlenstoffbestandteile entgasen nämlich erwartungsgemäß in der Keramisierungszone und verbrennen unkontrolliert, wodurch der Keramisierungsprozeß nachteilig beeinfluß wird.

Es wird daher in der gleichen Publikation vorgeschlagen, anstelle eines Schubrostes einen Stufenofen bestimmter Konzeption zu verwenden, womit den Anforderungen bei der Keramisierung von tonig-silikatischen Gesteinen, die auch brennbare Substanzen enthalten, entsprochen werden soll. Dieser Stufenofen soll vier Verfahrensstufen, nämlich eine Trockenstufe, eine Verbrennungsstufe, eine Keramisierungsstufe und eine Kühlstufe, umfassen und unter optimaler Ausnutzung der aus den einzelnen Prozeßstufen gewonnenen bzw. diesen zugeführten Energie betrieben werden können. Es wird aber schließlich darauf hingewiesen, daß hinsichtlich der Bewährung dieses Ofens zum gegenwärtigen Zeitpunkt noch keine Aussage gemacht werden könne.

Ein mit dem vorgeschlagenen Stufenofen durchgeführtes Keramisierungsverfahren erfordert eine Beaufschlagung der einzelnen Ofenstufen einschließlich der Trockenstufe mit Steinkohlenaufbereitungsabgängen, die entweder ein sehr schmales Korngrößenband aufweisen oder aber im Falle eines breiten Korngrößenbandes zumindest in einer gleichmäßigen Mischung vorliegen.

Während noch nicht getrocknete Steinkohlenaufbereitungsabgänge zur Klumpenbildung neigen und nur sehr schwierig gleichmäßig mischbar sind, lassen sich getrocknete Steinkohlenaufbereitungsabgänge zwar leichter mischen, neigen aber auch leicht dazu, sich wieder zu entmischen. Befinden sich aber in der Trockenstufe oder der Verbrennungsstufe korngrößenmäßig ungemischte bzw. wieder entmischte Steinkohlenaufbereitungsabgänge, so erfolgt zwangsläufig eine partiell unterschiedliche Entgasung bzw. Verbrennung mit entsprechend unterschiedlicher Hitzeentwicklung. Eine gleichmäßige Keramisierung ist daher nicht gewährleistet.

Der Erfindung liegt die Aufgabe zugrunde, ein Verfahren zur Gewinnung von Baustoffen aus Steinkohlenaufbereitungsabgängen vorzuschlagen, mit dem sich die Steinkohlenaufbereitungsabgängen, mit dem sich die Steinkohlenaufbereitungsabgänge thermisch so homogen umwandeln lassen, daß daraus Baustoffe mit bestimmten, gleichmäßigen Qualitätseigenschaften herstellbar sind.

Ausgehend von dem eingangs beschriebenen Verfahren, wird zur Lösung der gestellten Aufgabe vorgeschlagen, die Abgänge mit einer Körnung bis zu 60 mm nach Körnungsklassen getrennt in einer ersten Prozeßstufe zu trocknen und auf eine Feststofftemperatur von etwa 300 °C aufzuheizen, in einer zweiten Prozeßstufe als Mischung mit einer Aufheizgeschwindigkeit bis zu 10 °C/min auf eine Endtemperatur etwa von 800 °C bis 1 100 °C zu erhitzen und in einer dritten Prozeßstufe bis zu 1,5 h auf dieser Temperatur zu halten, wobei die Abgänge durch Schwerkraft im Gegenstrom eines bis zu etwa 1 000 °C heißen Gasstromes durch die Prozeßstufen bewegt werden.

Das erfindungsgemäße Verfahren erlaubt es, nicht nur in der ersten, die Trocknung bewirkenden Prozeßstufe auf eine Mischung der umzuwandelnden Steinkohlenaufbereitungsabgänge zu verzichten, sondern unterwirft die Steinkohlenaufbereitungsabgänge bewußt nach Körnungsklassen getrennt dem Trocknungsprozeß, so daß die unterschiedlichen Körnungsklassen eine ihnen jeweils angepaßte Trocknungsbehandlung erfahren können. Eine Mischung aus den unterschiedlichen Körnungsklassen kann dann ohne Schwierigkeiten bei der Überführung in die zweite, der eigentlichen Aufheizung dienende Prozeßstufe erfolgen, so daß die erst darin zustande gekommene Mischung stabiler ist als eine bereits mit dem Verfahrensbeginn eingeleitete Mischung.

Die der zweiten Prozeßstufe somit vorliegende Körnungsmischung reagiert über die Aufheizdauer homogen, so daß es unerheblich ist, wenn sich nach dem Erreichen der Endtemperatur beim Überführen der so behandelten Steinkohlenaufbereitungsabgänge in die dritte, lediglich der Temperaturaufrechterhaltung dienende Prozeßstufe eine Entmischung einstellen sollte.

Die auf etwa 300 °C begrenzte Feststofftemperatur läßt sich für die nach Körnungsklassen getrennten Abgänge leicht einhalten, zumal in dieser Prozeßstufe aufgrund der Temperaturbegrenzung noch nicht mit einer exothermen Reaktion der Abgänge zu rechnen ist. Erst in der zweiten, auf eine Endtemperatur etwa von 800 °C bis 1 100 °C ausgelegten Prozeßstufe reagiert die in den Abgängen enthaltene brennbare Substanz exotherm, so daß es für ein homogenes Endprodukt darauf ankommt, diese Prozeßstufe mit Abgängen gemischter Körnungsklassen zu beaufschlagen.

Es liegt im Rahmen der Erfindung, die Mischung in dieser Prozeßstufe durch Zuschläge, wie beispielsweise Kalkstaub, zu ergänzen.

Hat das Gemisch je nach den angestrebten Qualitätseigenschaften des Endproduktes die dafür vorgesehene Endtemperatur erreicht, genügt es, das Gemisch erfindungsgemäß bis zu 1,5 h auf dieser Temperatur zu halten, um alle Reaktionen innerhalb des Gemisches auslaufen zu lassen.

Die Ausnutzung der Schwerkraft zur Bewegung der Abgänge durch die einzelnen Prozeßstufen hat den Vorteil, daß mechanische, der aggressiven Atmosphäre innerhalb der Prozeßstufen ausgesetzte Transportmittel entbehrlich sind. Der im Gegenstrom durch die Prozeßstufen geleitete, bis zu etwa 1 000 °C heiße Gasstrom bewirkt eine dauernde zusätzliche Verlagerung und intensive Umspülung der Partikel, wobei sich aufgrund der brennbaren Substanz innerhalb des Gemisches die Endtemperatur des Gemisches über die Temperatur des Gasstromes einstellen läßt.

Ausgehend von den Merkmalen des Anspruches 1 hat es sich erfindungsgemäß als günstig erwiesen, daß in der zweiten und dritten Stufe die Temperatur des heißen, im Kreislauf geführten Gasstromes durch die Zufuhr geregelter Mengen an Verbrennungsluft und/oder durch die Höhe der Vorwärmung der Verbrennungsluft, z. B. in einer Kühlstufe für die Abgänge, auf einem konstanten Niveau gehalten wird. Auf diese Weise wird eine unkontrollierte Verbrennung der im Gestein enthaltenen Kohlenstoffbestandteile weitgehend vermieden. Insbesondere die Regelung der zugeführten Verbrennungsluft läßt sich auf einfache Weise und schnell durchführen.

Günstig ist es auch, daß die bei der Kühlung der Abgänge frei werdende Wärmeenergie zur indirekten Trocknung des Eingangsmaterials außerhalb des Schachtofens dient.

Nach einer Ausgestaltung des erfindungsgemäßen Verfahrens läßt sich eine besonders homogenisierende Wirkung dadurch erreichen, daß der heiße Gasstrom pulsierend durch die umzuwandelnden Abgänge geleitet wird.

Zur Durchführung des Verfahrens wird eine Anlage vorgeschlagen, welche eine vertikal in Sektoren unterteilte, sich im Querschnitt von oben nach unten verjüngende kegelförmige Trocken- und Vorheizkammer mit einem verschließbaren Bodenauslaß aufweist, an dem ein Förderkanal angeschlossen ist, der zu einer Erhitzungs- und Reaktionskammer führt, die kegelmantelförmig die Trocken- und Vorheizkammer umgibt und bodenseitig einen kreisscheibenförmigen Rost aufweist, unter dem eine von einem zylindrischen Mantel umgebene Verweilkammer angeordnet ist, die innerhalb eines zur Erhitzungs- und Reaktionskammer spiegelbildlich angeordneten, gleichfalls kegelmantelförmigen Schachtes angeordnet ist und verschließbare Auslaßöffnungen aufweist, die in einen unteren Auslaßraum des Schachtes münden.

Die erfindungsgemäße Anlage zeichnet sich durch eine außerordentlich kompakte Anordnung der einzelnen Behandlungskammern zueinander aus, so daß ein Minimum an Energieverlusten entsteht.

Die vertikal in Sektoren unterteilte Trocken- und Vorheizkammer ermöglicht in einfacher Weise eine nach Körnungsklassen getrennte Beaufschlagung und partizipiert durch ihre konzentrische Anordnung innerhalb der Erhitzungs- und Reaktionskammer an der darin freigesetzten Energie.

Nach einer weiteren Ausgestaltung der Erfindung ist der kreisscheibenförmige Rost mit Brennerdüsen ausgestattet, die in die Erhitzungs- und Reaktionskammer weisen, welche gleichfalls in vertikale Sektoren unterteilt sein kann, was für den Fall vorteilhaft ist, daß die Trennung der Körnungsklassen zunächst noch aufrechterhalten bleiben soll. Eine weitere Ausgestaltung der Erfindung sieht vor, auch die Verweilkammer in Sektoren aufzuteilen. So ist mit der sektoralen Unterteilung sowohl der Erhitzungs- und Reaktionskammer als auch der Verweilkammer auf einfache Weise die Voraussetzung gegeben, in hintereinandergeschalteten Kammer-Sektoren die exothermen Prozesse nach Maßgabe bestimmter Temperatur-Zeitprofile autonom zu steuern und die einzelnen Mischungen in Baustoffe des jeweils gewünschten Keramisierungsgrades umzuwandeln. An der Decke der Erhitzungs- und Reaktionskammer ist eine Absaugleitung angeschlossen, die zu einer Brennkammer führt, welche innerhalb eines vom kegelmantelförmigen Schacht umgebenen Kegelraumes angeordnet ist.

Der erfindungsgemäße Anordnung der Brennkammer innerhalb des vom kegelmantelförmigen Schacht umgebenen Kegelraumes bewirkt gleichfalls eine Abschirmung des Brennkammer gegen Energieverluste.

Nach einer weiteren Ausgestaltung der erfindungsgemäßen Anlage ist vorgesehen, daß Gleitflächen bildende Wände der Kammer mit kaskadenförmigen Vorsprüngen sowie mit jeweils zum Kammerinnern weisenden Düsen ausgestattet sind, die mit einem heißen Gasstrom beaufschlagbar sind.

Die kaskadenförmigen Vorsprünge auf den Gleitflächen bildenden Wänden der Kammern bewirken eine anhaltende Umschichtung der darübergleitenden Abgänge. Durch die Ausstattung der Wände mit Düsen wird nicht nur diese Wirkung unterstützt, sondern der Gasstrom in gleichmäßiger Verteilung durch die Abgänge geleitet.

Schließlich gehen nach einer Ausgestaltung der erfindungsgemäßen Anlage die kegelförmige Außenwand der Erhitzungs- und Reaktionskammer und die spiegelbildlich zu dieser angeordnete, gleichfalls kegelförmige Außenwand des Schachtes hyperbolisch ineinander über.

Durch den erfindungsgemäßen hyperbolischen Übergang der Außenwände ist eine scharfkantige Querschnittskontraktion im Übergangsbereich vermieden, so daß die Gefahr einer den Weitertransport des behandelten Materials behindernden Brückenbildung nicht befürchtet werden muß.

Zur Durchführung des erfindungsgemäßen Verfahrens wird alternativ zu der beschriebenen Anlage die Verwendung eines senkrechten Schachtofens mit ebenen senkrechten Wänden, z. B. gemäß der DE-C 28 12 005 oder DE-C 25 07 735, für die Behandlungsstufen 2 und 3 mit mindestens zwei übereinander angeordneten Behandlungsstufen für die sich im Schachtofen abwärts bewegenden Abgänge vorgeschlagen, wobei die Gase in den geschlossenen Kreisläufen geführt werden und über waagerechte, etwa in der Mitte der Kammer angeordnete, sich über die gesamte Kammerlänge erstreckende Kanäle mit seitlichen und unteren Gasöffnungen zu- und abgeführt werden und wobei unterhalb des Schachtofens im Anschluß an eine eventuell zusätzlich vorhandene Kühlstufe Abzugseinrichtungen zum Austrag der Abgänge vorhanden sind und wobei die Abgänge oberhalb des Schachtofens klassifiziert getrocknet und vor Eintrag in den Schachtofen gemischt werden. Nach einer Trocknung der Abgänge nach Korngrößen geordnet in verschiedenen nebeneinander angeordneten an sich bekannten Behältern werden die Abgänge miteinander vermischt und in dem an sich bekannten senkrechten Schachtofen nach dem erfindungsgemäßen Verfahren behandelt. Dieser Schachtofen kann dabei indirekt und/oder direkt beheizt werden. Bei indirekter Beheizung des Schachtofens sind zusätzlich in den Kammerwänden zur partiellen Verbrennung der Abgänge in verschiedenen Höhen regelbare Verbrennungsluftzuführungen und Auslaßöffnungen für das Kreislaufgas angeordnet.

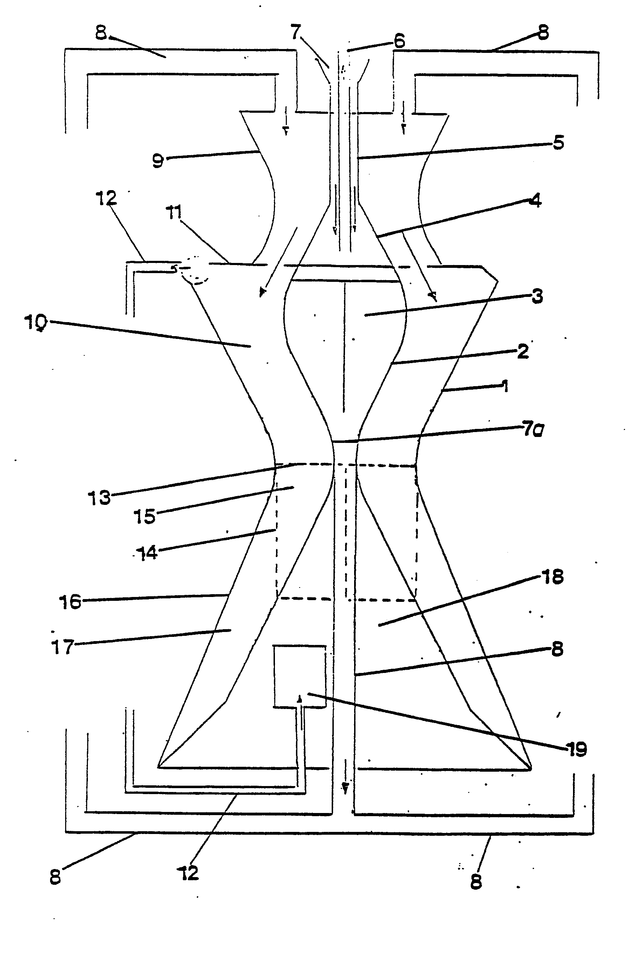

In der Zeichnung ist ein Ausführungsbeispiel einer erfindungsgemäßen Anlage in einem vertikalen Querschnitt dargestellt:

Die Anlage wird von einem im wesentlichen doppelkegeligen Außenmantel 1 umhüllt, in dem konzentrisch ein im wesentlichen ebenso ausgebildeter, jedoch in seinen Durchmessern kleiner dimensionierter Innenmantel 2 so angeordnet ist, daß zwischen dem Außenmantel 1 und dem Innenmantel 2 ein sich über die Höhe der Anlage erstreckender Ringraum verbleibt, wobei ein gemeinsamer kleinerer Grundkreis der hyperbolisch ineinander übergehenden doppelkegelförmigen Mantelflächen sich etwa auf halber Höhe der Anlage befindet.

Der obere Teil des Mantels 2 umschließt eine sich im Querschnitt von oben nach unten verjüngende kegelförmige Trocken- und Vorheizkammer 3, die vertikal in Sektoren unterteilt ist und von einem Steildach 4 abgedeckt wird. Ein gleichfalls in Sektoren unterteilter Füllstutzen 5 ist mit einer konzentrisch darin angeordneten Entgasungleitung 6 versehen und durchdringt das Steildach 4. Über einen Aufgabetrichter 7 gelangen die nach Körnungsklassen getrennten Waschberge über den Füllstutzen 5 in die mit einem verschließbaren Bodenauslaß 7a versehene Trocken- und Vorheizkammer 3, wobei durch die sektorenförmige Vertikalunterteilung des Füllstutzens 5 und der Trocken- und Vorheizkammer 3 die Trennung der Waschberge nach Körnungsklassen beibehalten wird.

Über vorzugsweise in der Nähe des verschließbaren Bodenauslasses 7 angeordnete, nicht näher dargestellte Brennerdüsen erfolgt die Trocknung und Aufheizung der Waschberge, bis diese eine Feststofftemperatur von etwa 300 °C erreicht haben.

Über einen am Bodenauslaß 7a angeschlossenen Förderkanal 8 werden die getrockneten und aufgeheizten Waschberge aus der Trocken- und Vorheizkammer 3 abgezogen und einer den Füllstutzen 5 umgebenden Aufgabevorrichtung 9 zugeleitet. Im Bedarfsfalle können mehrere Förderkanäle 8 vorgesehen sein, so daß die Trennung der Waschberge nach Körnungsklassen weiterhin aufrechterhalten bleibt. Es besteht natürlich auch die Möglichkeit, die einzelnen Sektoren der Trocken- und Vorheizkammer 3 nacheinander über nur einen Förderkanal 8 zu entleeren, zumal die Trocken- und Aufheizdauer der einzelnen Körnungsklassen unterschiedlich sein kann.

Aus der gleichfalls in vertikale Sektoren unterteilbaren Aufgabeeinrichtung 9 gelangen die Waschberge in eine die Trocken- und Vorheizkammer 3 kegelmantelförmig umgebende Erhitzungs- und Reaktionskammer 10, die im Bereich einer Kammerdecke 11 an eine Gasabsaugleitung 12 angeschlossen ist. Bodenseitig ist die Erhitzungs- und Reaktionskammer 10 mit einem kreisscheibenförmigen Rost 13 ausgestattet. Mittels nicht dargestellter, über die Wände der Erhitzungs- und Reaktionskammer 10 verteilt angeordneter Brennerdüsen wird beispielsweise eine Keramisierung der Waschberge herbeigeführt.

Ist die Reaktion der Waschberge im wesentlichen beendet, wird der kreisscheibenförmige Rost 13 so geöffnet, daß die Waschberge in eine unter dem Rost 13 angeordnete, von einem zylindrischen Mantel 14 umgebene Verweilkammer 15 gelangen, die innerhalb eines kegelförmigen, zur Erhitzungs- und Reaktionskammer 10 spiegelbildlichen Schachtes 16 angeordnet ist.

Nach einer bestimmten Verweildauer gelangen die so behandelten Waschberge über Auslaßöffnungen der Verweilkammer 15 in den Auslaßraum 17 des Schachtes 16.

Der Schacht 16 umschließt einen kegelförmigen Freiraum 18, der sich zur Unterbringung einer Brennkammer 19 anbietet, die an die Gasabsaugleitung 12 angeschlossen ist. In der Brennkammer 19 lassen sich somit zur Deckung der erforderlichen Prozeßenergie die in der Erhitzungs- und Reaktionskammer 3 freigesetzten brennbaren Gase mitverwerten, wobei durch die Anordnung der Brennkammer 19 nur äußerst geringe Energieverluste entstehen.

Um die ausschließlich unter Ausnutzung der Schwerkraft erfolgende Bewegung des Behandlungsgutes durch die einzelnen Kammern zu gewährleisten, sind die als Gleitflächen dienenden Kammerwände mit nicht dargestellten kaskadenförmigen Vorsprüngen versehen und mit gleichfalls nicht dargestellten, zum Kammerinnern weisenden Düsen bestückt. Mittels eines die Düsen beaufschlagenden heißen Gasstromes läßt sich das Behandlungsgut nicht nur gleichmäßig aufheizen, sondern auch, unterstützt durch die dauernde Umschichtung aufgrund der kaskadenförmigen Vorsprünge, in einem aufgelockerten Zustand halten.

## Patentansprüche

1. Verfahren zur Gewinnung von Baustoffen aus Steinkohlenaufbereitungsabgängen, wobei das in den Abgängen enthaltene Gesteinsmaterial durch thermische Umwandlung keramisiert und die dazu erforderliche Prozeßenergie mindestens teilweise aus der in den Abgängen enthaltenen brennbaren Substanz gewonnen wird, dadurch gekennzeichnet, daß die Abgänge mit einer Körnung bis zu 60 mm nach Körnungsklassen getrennt in einer ersten Prozeßstufe getrocknet und auf eine Feststofftemperatur von etwa 300 °C aufgeheizt werden, in einer zweiten Prozeßstufe als Mischung mit einer Aufheizgeschwindigkeit bis zu 10 °C pro Minute auf eine Endtemperatur von etwa 800 °C bis zu 1 100 °C erhitzt und in einer dritten Prozeßstufe bis zu 1,5 h auf dieser Temperatur gehalten werden, wobei die Abgänge durch Schwerkraft im Gegenstrom eines bis zu etwa 1 000 °C heißen Gasstromes durch die Prozeßstufen bewegt werden.

2. Verfahren nach Anspruch 1, dadurch gekennzeichnet, daß in der zweiten und dritten Stufe die Temperatur des heißen, im Kreislauf geführten Gasstromes durch die Zufuhr geregelter Mengen an Verbrennungsluft und/oder durch die Höhe der Vorwärmung der Verbrennungsluft in einer Kühlstufe für die Abgänge auf einem konstanten Niveau gehalten wird.

3. Verfahren nach Anspruch 1, dadurch gekennzeichnet, daß der heiße Gasstrom pulsierend durch die umzuwandelnden Abgänge geleitet wird.

4. Verfahren nach den Ansprüchen 1 bis 3, dadurch gekennzeichnet, daß die bei der Kühlung der Abgänge frei werdende Wärmeenergie zur indirekten Trocknung des Eingangsmaterials außerhalb des Schachtofens dient.

5. Anlage zur Durchführung des Verfahrens nach Anspruch 1, gekennzeichnet durch eine vertikal in Sektoren unterteilte, sich im Querschnitt von oben nach unten verjüngende kegelförmige Trocken- und Vorheizkammer (3) mit einem verschließbaren Bodenauslaß (7a), an dem ein Förderkanal (8) angeschlossen ist, der zu einer Erhitzungs- und Reaktionskammer (10) führt, die kegelmantelförmig die Trocken- und Vorheizkammer (3) umgibt und bodenseitig einen kreisscheibenförmigen Rost (13) aufweist, unter dem eine von einem zylindrischen Mantel (14) umgebene, in vertikale Sektoren unterteilte Verweilkammer (15) angeordnet ist, die innerhalb eines zur Erhitzungs- und Reaktionskammer (10) spiegelbildlich angeordneten, gleichfalls kegelmantelförmigen Schachtes (16) angeordnet ist und verschließbare Auslaßöffnungen aufweist, die in einen unteren Auslaßraum des Schachtes münden.

6. Anlage nach Anspruch 5, dadurch gekennzeichnet, daß der kreisscheibenförmige Rost (13) mit Brennerdüsen ausgestattet ist, die in die gleichfalls in vertikale Sektoren unterteilte Erhitzungs- und Reaktionskammer (10) weisen, an deren Decke (11) eine Absaugleitung (12) angeschlossen ist, die zu einer Brennkammer (19) führt, welche innerhalb eines vom kegelmantelförmigen Schacht (16) umgebenen Kegelraumes (18) angeordnet ist.

7. Anlage nach den Ansprüchen 5 und 6, dadurch gekennzeichnet, daß Gleitflächen bildende Wände der Kammern (3), (10), (15) mit kaskadenförmigen Vorsprüngen sowie mit jeweils zur Kammerinneren weisenden Düsen ausgestattet sind, die mit einem heißen Gasstrom beaufschlagt sind.

8. Anlage nach den Ansprüchen 5 bis 7, dadurch gekennzeichnet, daß die kegelförmige Außenwand der Erhitzungs- und Reaktionskammer (10) und die spiegelbildlich dazu angeordnete, gleichfalls kegelförmige Außenwand des Schachtes (16) hyperbolisch ineinander übergehen.

9. Verwendung eines senkrechten Schachtofens mit ebenen, senkrechten Wänden zur Durchführung des Verfahrens in den Behandlungsstufen 2 und 3 nach Anspruch 1 mit mindestens zwei übereinander angeordneten Behandlungsstufen für die sich im Schachtofen abwärts bewegenden Abgänge, wobei die Gase in geschlossenen Kreisläufen geführt werden und über waagerechte, etwa in der Mitte der Kammer angeordnete, sich über die gesamte Kammerlänge erstreckende Kanäle mit seitlichen und unteren Gasöffnungen zu- und abgeführt werden und wobei unterhalb des Schachtofens im Anschluß an eine eventuell zusätzlich vorhandene Kühlstufe Abzugseinrichtungen zum Austrag der Abgänge vorhanden sind und wobei die Abgänge oberhalb des Schachtofens klassifiziert getrocknet und vor Eintrag in den Schachtofen gemischt werden.

10. Verwendung nach Anspruch 9, dadurch gekennzeichnet, daß der Schachtofen indirekt und/oder direkt beheizt wird.

11. Verwendung nach den Ansprüchen 9 und 10, dadurch gekennzeichnet, daß bei indirekter Beheizung des Schachtofens zusätzlich in den Kammerwänden zur partiellen Verbrennung der Abgänge in verschiedenen Höhen regelbare Verbrennungsluftzuführungen und Auslaßöffnungen für das Kreilslaufgas angeordnet sind.


**Claims**

1. A process to produce building materials from pit coal washing rejects, with the stone aggregates being contained in said rejects being made ceramic by thermal conversion and the process energy required to this end being obtained at least in part from the burnable substance contained in said rejects, characterized in that said rejects with a grain size range of up to 60 mm separated by grain size classes are dried in a first process stage and heated-up to approx. 300 °C solid matter temperature, then being heated up in a second process stage as a blend at a heat-up rate of up to 10 °C per minute to a final temperature of approx. 800 °C to 1,100 °C, and being maintained at this temperature for up to 1.5 hrs' time in a third process stage, with said rejects being moved through said process stages by gravity in countercurrent of an approx. 1,000 °C hot gas stream.

2. A process according to Claim 1, characterized in that in the second and third stage the temperature of said hot recirculated gas stream for said rejects is maintained at a constant level by supply of regulated quantities of combustion air and/or by the level of preheating of combustion air in a cooling stage.

3. A process according to Claim 1, characterized in that said hot gas stream is conducted pulsating through said rejects to be transformed.

4. A process according to Claims 1 to 3, characterized in that the heat energy being released on cooling of said rejects serves for drying of input material outside the shaft furnace.

5. A plant to implement said process according to Claim 1, characterized in that it comprises a conical drying and preheating chamber (3) being vertically subdivided into sectors, tapering in cross-section from top to bottom, being provided with a lockable bottom outlet port (7a) connected to a conveyor channel (8) leading to a heating-up and reaction chamber (10) enclosing said drying and preheating chamber (3) like a cone-shaped shell and being provided at its bottom side with a circular-disk shaped grillage (13) underneath of which is located a residence chamber (15) being enclosed by a cylindrical shell (14) and being subdivided into vertical sectors, with said residence chamber (15) being accommodated within a shaft (16) of a cone-sheel shape being located in a mirror-inverted arrangement towards said heating-up and reaction chamber (10) and having lockable outlet ports opening out into a lower outlet chamber of said shaft.

6. A plant according to Claim 5, characterized in that said circular-disk shaped grillage (13) is equipped with burner nozzles pointing into said heating-up and reaction chamber (10) likewise being subdivided into vertical sectors, at the top ceiling (11) of which is connected an exhaust duct (12) leading to a burner chamber (19) being accommodated within a conical room (18) being enclosed by said cone-sheel shaped shaft (16).

7. Plant according to Claims 5 and 6, characterized in that walls of chambers (3), (10), (15) forming sliding planes are provided with cascade-shaped projections and nozzles each pointing towards the chamber interior, with said nozzles being charged with a hot gas stream.

8. Plant according to Claims 5 to 7, characterized in that the cone-shaped outer wall of said heating-up and reaction chamber (10) and the mirror-invertedly arranged, cone-shaped outer wall of said shaft (16) change over into each other hyperbolically.

9. Use of a vertical shaft furnace with plane, vertical walls to implement said process in treatment stages 2 and 3 according to Claim 1 with at least two treatment stages arranged above each other for said rejects moving downwardly in said shaft furnace, with the gases being conducted in closed circuits and being charged and discharged through horizontal, roughly mid-chamber arranged channels running the full chamber length and being equipped with side and bottom arranged gas ports, and with there being provided discharge devices underneath the shaft furnace next to an additional cooling stage, if any, to discharge said rejects and with said rejects being classified, dried and blended above said shaft furnace prior to being charged into said shaft furnace.

10. Use according to Claim 9, characterized in that said shaft furnace is heated directly and/or indirectly.

11. Use according to Claims 9 and 10, characterized in that controllable combustion air feeders and discharge ports for recirculated gas are arranged additionally in the chamber walls at various elevations for partial combustion of rejects when the shaft furnace is run on indirect heating mode.


**Revendications**

1. Procédé de production des matériaux de construction à partir des rejets venant de la préparation de la houille, procédé par lequel les roches contenues dans les rejets sont céramizées par transformation thermique, l'énergie de procédé étant obtenue, du moins en partie, des substances combustibles contenues dans les rejets, caractérisé en ce que les rejets dont la granulométrie va jusqu'à 60 mm sont séchés et chauffés en fractions séparées jusqu'à une température de la matière solide d'environ 300 °C dans un premier étage et que le mélange est chauffé à une température finale d'environ 800 °C à 1 100 °C à raison de 10 °C/min. dans un deuxième étage et que, dans un troisième étage, cette température est maintenue durant 1,5 h, les rejets passant par gravité à travers les étages du procédé et en contre-courant à un flux de gaz dont la température peut aller jusqu'à 1 000 °C.

2. Procédé selon la revendication 1, caractérisé en ce qu'en étages 2 et 3 la température du gaz chaud en circulation est maintenue à un niveau constant par des débits réglés d'air de combustion et/ou par le degré du préchauffage de l'air de combustion qui se fait dans un étage de refroidissement des rejets.

3. Procédé selon la revendication 1, caractérisé en ce que le gaz chaud est passé par les rejets de façon pulsante.

4. Procédé selon les revendications 1-3, caractérisé en ce que l'énergie dégagée lors du refroidissement des rejets sert au séchage du matériel en dehors du four à cuve.

5. Equipement pour la réalisation du procédé selon la revendication 1, caractérisé par une chambre conique de séchage et de préchauffage (3) qui est divisée verticalement en secteurs et dont la section transversale diminue de haut en bas, chambre qui est munie d'une sortie inférieure (7a) avec organe d'arrêt où est raccordée une conduite transporteuse (8) allant à une chambre de chauffage et de réaction (10) en forme conique qui entoure la chambre de séchage et de préchauffage (3) et qui est munie en bas d'une grille circulaire (13) sous laquelle est disposée une chambre de séjour (15) qui est divisée en secteurs verticaux et entourée d'une enveloppe cylindrique (14) et qui est disposée à l'intérieur d'une gaine à enveloppe conique (16) qui, elle, est disposée symétriquement à la chambre de chauffage et de réaction (10) et qui comporte des sorties avec organes d'arrêt qui débouchent sur un espace de sortie de la gaine.

6. Equipement selon la revendication 5, caractérisé en ce que la grille circulaire (13) est munie de brûleurs dirigés vers la chambre de chauffage et de réaction (19) qui est également divisée en secteurs verticaux et au plafond (11) de laquelle est raccordée une conduite d'aspiration (12) allant vers une chambre de combustion (19) qui est disposée à l'intérieur d'un espace conique (18) entouré d'une gaine conique (16).

7. Equipement selon les revendications 5 et 6, caractérisé en ce que des parois des chambres (3), (10), (15) forment des faces glissantes et sont munies de saillies en cascades et de buses dirigées vers l'intérieur des chambres, buses qui sont alimentées en gaz chaud.

8. Equipement selon les revendications 5-7, caractérisé en ce que la paroi extérieure de forme conique de la chambre de chauffage et de réaction (10) et la paroi extérieure symétrique, également de forme conique, de la gaine (16) se joignent de façon hyperbolique.

9. Utilisation d'un four vertical avec des parois planes et verticales pour la réalisation du procédé dans les étages de traitement 2 et 3 selon la revendication 1 avec au moins 2 étages de traitement superposés pour les rejets descendant dans le four à cuve, où les gaz sont menés en circuits fermés et introduits et évacués par des canaux avec des ouvertures de gaz latérales et inférieures, canaux qui sont disposés horizontalement à peu près au milieu de la chambre et qui s'étendent sur toute la longueur de la chambre, des extracteurs pour l'évacuation des rejets étant prévus sous le four en aval d'un éventuel étage de refroidissement et les différentes fractions de rejet étant séchées au-dessus du four et mélangées avant d'être introduites au four.

10. Utilisation selon la revendication 9, caractérisée en ce que le four à cuve est chauffé indirectement et/ou directement.

11. Utilisation selon les revendications 9 et 10, caractérisé en ce qu'en chauffage indirect du four et en vue de la combustion partielle des rejets il est en plus prévu, aux différents niveaux des parois des chambres, des entrées réglables d'air de combustion et des sorties de gaz circulé.